(19) Europäisches Patentamt
European Patent Office
Office européen des brevets

(11) **EP 3 153 691 B1**

(12) **FASCICULE DE BREVET EUROPEEN**

(45) Date de publication et mention
de la délivrance du brevet:
**03.06.2020 Bulletin 2020/23**

(51) Int Cl.:
*F02K 9/48* *(2006.01)*  *F02K 9/56* *(2006.01)*
*F02K 9/58* *(2006.01)*

(21) Numéro de dépôt: **16192935.1**

(22) Date de dépôt: **07.10.2016**

(54) **PROCEDE ET CIRCUIT DE REGULATION DE MOTEUR-FUSEE**

REGELSCHALTUNG UND -VERFAHREN EINES RAKETENTRIEBWERKS

ROCKET ENGINE CONTROL CIRCUIT AND METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.10.2015 FR 1502103**

(43) Date de publication de la demande:
**12.04.2017 Bulletin 2017/15**

(73) Titulaire: **ArianeGroup SAS**
**75015 Paris (FR)**

(72) Inventeurs:
• **KLEIN, Manuel**
**27200 VERNON (FR)**
• **HAYOUN, David**
**MONTREAL, H3W 2Y2 (CA)**
• **LE GONIDEC, Serge**
**27200 VERNON (FR)**
• **REICHSTADT, Sébastien**
**92600 ASNIERES/SEINE (FR)**

(74) Mandataire: **Cabinet Beau de Loménie**
**158, rue de l'Université**
**75340 Paris Cedex 07 (FR)**

(56) Documents cités:
**FR-A1- 2 928 464    US-A- 3 851 157
US-B1- 7 477 966**

**EP 3 153 691 B1**

## Description

<u>Arrière-plan de l'invention</u>

La présente invention concerne le domaine des moteurs-fusées à au moins un ergol liquide et plus précisément leur régulation.

On entend par « moteur-fusée » dans ce sens, tout moteur à réaction anaérobie, apte à générer une poussée par la détente et accélération d'un gaz à haute enthalpie dans une tuyère, notamment une tuyère convergente-divergente. Parmi les moteurs-fusées, on compte en particulier les moteurs-fusées chimiques, dans lequel le gaz à haute enthalpie est généré par une réaction chimique dans au moins une chambre de combustion en amont de la tuyère. Ces moteurs-fusées chimiques peuvent être à ergol ou ergols solides, le gaz à haute enthalpie y étant généré par réaction chimique à partir d'au moins un ergol. On peut donc entendre par « moteur-fusée à au moins un ergol liquide » un moteur-fusée chimique à un seul ergol liquide (monoergol), à plusieurs ergols liquides (multiergol) ou bien hybride. Dans un tel moteur-fusée à au moins un ergol liquide on peut en principe réguler la génération de gaz à haute enthalpie, et donc la poussée, à travers l'alimentation de la chambre de combustion en ergol ou ergols liquides. On connaît plusieurs alternatives pour assurer cette alimentation, dont notamment l'alimentation par turbopompe, dans laquelle la chambre de combustion du moteur-fusée est alimentée en au moins un premier ergol à travers un premier circuit d'alimentation en ergol liquide avec une première pompe pour l'alimentation de la chambre de combustion en un premier ergol liquide et une première turbine pour l'actionnement de la première pompe.

Dans le domaine des moteurs-fusées on cherche en fait de plus en plus à réguler la poussée sur une large plage de valeurs, par exemple de 20 à 100 % de leur poussée nominale. Sur des lanceurs spatiaux, par exemple, cela permet d'augmenter la versatilité des lanceurs, notamment pour les lancements multiples, et ainsi améliorer leur efficacité économique. Sur des satellites ou des véhicules de transfert orbital, une telle plage de poussée élargie permet de prolonger la durée de vie des engins, avec aussi des retombées économiques très favorables.

Toutefois, cette régulation fait typiquement appel à des procédés et circuits de régulation relativement complexes, impliquant la commande d'un nombre important de vannes et autres dispositifs de régulation de l'alimentation de la chambre à combustion en au moins un ergol liquide, comme dans le procédé et dispositif divulgués dans le brevet US 7,477,966 B1. Ceci peut exiger un effort de calcul important, difficile à fournir avec les moyens limités embarqués sur un tel engin, et rend en outre la régulation vulnérable à des défaillances de chacun de ces multiples dispositifs de régulation.

<u>Objet et résumé de l'invention</u>

La présente divulgation vise donc à remédier à ces inconvénients, en proposant un procédé qui permette une régulation simple et robuste du fonctionnement d'un moteur-fusée comprenant au moins une chambre de combustion et un premier circuit d'alimentation en ergol liquide avec une première pompe pour un premier ergol liquide et une première turbine pour l'actionnement de la première pompe, une première vanne d'alimentation et un dispositif de régulation de la première turbine.

Dans au moins un mode de réalisation, ce but est atteint grâce au fait que ce procédé de régulation comprend les étapes suivantes :

calcul d'une consigne d'ouverture de la première vanne d'alimentation, à partir d'une consigne externe, suivant une loi de commande en boucle ouverte ;
calcul d'une consigne pour le dispositif de régulation de la première turbine, à partir de ladite consigne externe et d'au moins une valeur de rétroaction, suivant une loi de commande en boucle fermée ; et
commande de la première vanne d'alimentation et du dispositif de régulation de la première turbine, suivant les consignes respectives.

Grâce à ces dispositions, la commande en boucle fermée de la première turbine permet de corriger les erreurs dues à la commande en boucle ouverte de la première vanne d'alimentation, permettant ainsi une régulation précise du moteur-fusée même avec une puissance de calcul relativement peu élevée et en agissant sur un nombre limité de dispositifs de régulation.

Ce procédé de régulation est notamment applicable à un moteur-fusée à cycle dit « expander », dans lequel ledit premier circuit d'alimentation comprend un échangeur de chaleur pour chauffer le premier ergol liquide en aval de la première pompe, et traverse la première turbine en aval de l'échangeur de chaleur pour actionner la première pompe par détente, dans la première turbine, du premier ergol liquide chauffé dans l'échangeur de chaleur. Toutefois, il est également applicable à d'autres types de moteurs-fusées, comme par exemple les moteurs-fusées à générateur de gaz, comprenant un générateur de gaz pour alimenter au moins la première turbine en gaz de combustion chauds. Dans ce cas, le dispositif de régulation de la première turbine peut notamment comprendre au moins une vanne d'alimentation du générateur de gaz. Par ailleurs, « générateur de gaz » doit être compris dans un sens large englobant tous les dispositifs de combustion totale ou partielle pouvant générer des gaz de combustions chauds, y compris une préchambre de combustion dans un moteur-fusée à combustion étagée.

Indépendamment de ce que le moteur-fusée soit un moteur-fusée à cycle « expander », un moteur-fusée à générateur de gaz ou un moteur-fusée d'un autre type, le dispositif de régulation de la première turbine peut notamment comprendre une vanne de contournement de la première turbine. Une telle vanne de contournement permet une régulation du débit de fluide moteur traversant la turbine et donc, indirectement, du débit du premier ergol pompé par la première pompe et fourni ainsi à la chambre de combustion à travers la première vanne d'alimentation.

Ladite consigne externe peut notamment comprendre une valeur de consigne de pression de gaz dans la chambre de combustion. Dans ce cas, l'au moins une valeur de rétroaction peut alors comprendre une valeur mesurée de pression de gaz dans la chambre de combustion, de manière à ce que la loi de commande en boucle fermée corrige une erreur entre valeur de consigne et valeur mesurée. Toutefois, l'utilisation d'une valeur estimée, plutôt qu'une valeur mesurée, comme valeur de rétroaction, est également envisageable.

Afin de limiter les sollicitations exercées sur la première vanne d'alimentation et/ou le dispositif de régulation de la première turbine, le procédé peut en outre comprendre une étape de filtrage de la consigne externe dans un filtre de poursuite, et le calcul de la consigne d'ouverture de la première vanne d'alimentation de la chambre de combustion être alors effectué à partir de la consigne externe filtrée dans cette étape de filtrage, et/ou le calcul de la consigne pour le dispositif de régulation de la première turbine est effectué par un correcteur de perturbations à partir de l'au moins une valeur de rétroaction et de la consigne externe filtrée dans cette étape de filtrage, le correcteur de perturbations ayant une fréquence de coupure plus élevée que le filtre de poursuite.

Quoique le procédé de régulation puisse être utilisé pour la régulation d'un moteur-fusée monoergol ou hybride, dont la chambre de combustion ne soit donc alimenté qu'en un seul ergol liquide, il est également applicable sur un moteur-fusée comprenant en outre un deuxième circuit d'alimentation en ergol liquide pour un deuxième ergol liquide. Ladite consigne externe peut alors comprendre une valeur de consigne de rapport entre un débit du premier ergol et un débit du deuxième ergol. Dans ce cas, ladite au moins une valeur de rétroaction peut comprendre une valeur mesurée du rapport entre le débit du premier ergol et le débit du deuxième ergol, qui pourra alors être comparée à sa valeur de consigne dans la boucle fermée de régulation de la première turbine.

Le deuxième circuit d'alimentation en ergol liquide peut notamment comprendre une deuxième vanne d'alimentation, et le procédé de régulation comprendre alors aussi une étape de calcul d'une consigne d'ouverture de la deuxième vanne d'alimentation, à partir de la consigne externe, suivant une loi de commande en boucle ouverte, et la commande de la deuxième vanne d'alimentation suivant cette consigne d'ouverture.

Par ailleurs, bien que d'autres moyens d'assurer la circulation du deuxième ergol soient aussi envisageables, comme par exemple un réservoir pressurisé, le deuxième circuit d'alimentation en ergol liquide peut notamment comprendre une deuxième pompe pour ledit deuxième ergol liquide. Cette deuxième pompe pourrait être actionnée par la première turbine ou par d'autres moyens envisageables par la personne du métier, mais une option particulièrement envisageable est que le moteur-fusée comprenne une deuxième turbine pour l'actionnement de la deuxième pompe. Le moteur-fusée pourrait alors comprendre aussi un dispositif de régulation de la deuxième turbine, et le procédé de régulation comprendre aussi le calcul d'une consigne pour le dispositif de régulation de la deuxième turbine, à partir de ladite consigne externe et d'au moins une valeur de rétroaction, suivant une loi de commande en boucle fermée, et la commande du dispositif de régulation de la deuxième turbine, suivant cette consigne pour le dispositif de régulation de la deuxième turbine. La circulation des deux ergols serait donc régulée de manière analogue. Le dispositif de régulation de la première turbine et celui de la deuxième turbine peuvent par ailleurs ne former qu'un seul et/ou partager certains éléments.

La présente divulgation concerne également un circuit de régulation d'un moteur fusée à au moins un ergol liquide, ledit moteur-fusée comprenant au moins une chambre de combustion et un premier circuit d'alimentation en ergol liquide avec une première pompe pour un premier ergol liquide et une première turbine pour l'actionnement de la première pompe, une première vanne d'alimentation et un dispositif de régulation de la première turbine. Dans au moins un mode de réalisation, ce circuit de régulation comprend une boucle ouverte de commande d'au moins la première vanne d'alimentation, avec un module de calcul d'une consigne d'ouverture de la première vanne d'alimentation de la chambre de combustion à partir d'une consigne externe, et une boucle fermée de commande de la première turbine, avec un module de calcul d'une consigne pour le dispositif de régulation de la première turbine à partir de ladite consigne externe et d'au moins une valeur de rétroaction.

Par ailleurs, cette divulgation concerne aussi un moteur-fusée équipé d'un tel circuit de régulation et un logiciel et/ou support informatique contenant des instructions pour l'exécution du procédé de régulation par une unité électronique de commande programmable. Par « support informatique » on entend tout support permettant le stockage de données, de manière durable et/ou transitoire, et leur subséquente lecture par un système informatique. Ainsi, on entend par « support informatique », entre autres, les bandes magnétiques, les disques magnétiques et/ou optiques, ou les mémoires électroniques d'état solide, tant volatiles que non-volatiles.

Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :

- la figure 1 est une illustration schématique d'un moteur-fusée biergol à cycle « expander » suivant un mode de réalisation ;
- la figure 2 est un schéma fonctionnel d'un circuit de régulation du moteur-fusée de la figure 1 ;
- la figure 3 est une illustration schématique d'un moteur-fusée biergol à combustion étagée ; et
- la figure 4 est un schéma fonctionnel d'un circuit de régulation du moteur-fusée de la figure 3.

Description détaillée de l'invention

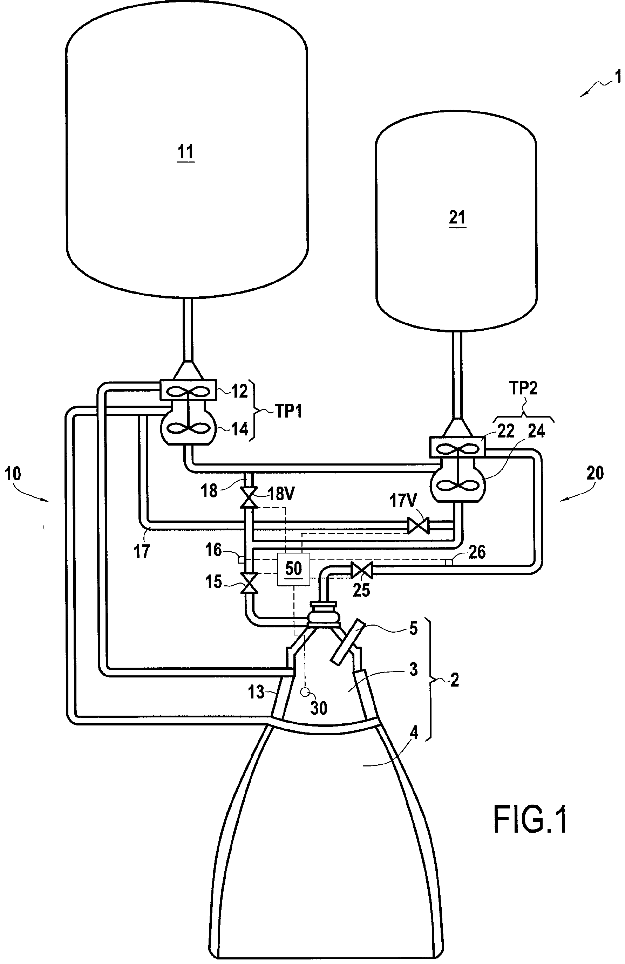

La figure 1 illustre schématiquement un moteur-fusée 1 à cycle « expander », tel que peut être incorporé, par exemple, dans un étage de lanceur spatial, un véhicule de transfert orbital ou un autre engin spatial.

Ce moteur-fusée 1 comprend une chambre propulsive 2, un premier circuit d'alimentation 10, un deuxième circuit d'alimentation 20, et une unité électronique de commande 50. La chambre propulsive 2 comprend une chambre de combustion 3, un allumeur 5 et une tuyère 4 pour la détente et éjection supersonique de gaz à haute enthalpie générés par la combustion d'un mélange d'un premier et un deuxième ergol liquides dans la chambre de combustion 3. Le premier circuit d'alimentation 10 relie un premier réservoir 11, contenant le premier ergol liquide, à la chambre propulsive 2, pour alimenter la chambre de combustion 3 en ce premier ergol liquide. Le deuxième circuit d'alimentation 20 relie un deuxième réservoir 21, contenant le deuxième ergol liquide, à la chambre propulsive 2, pour alimenter la chambre de combustion 3 en ce deuxième ergol liquide.

Dans le mode de réalisation illustré, le premier circuit d'alimentation 10 comprend, successivement dans le sens d'écoulement du premier ergol du premier réservoir 11 à l'intérieur de la chambre de combustion 3, une première pompe 12, un échangeur de chaleur 13, une première turbine 14, une deuxième turbine 24, et une première vanne 15 d'alimentation de la chambre de combustion 3. Le deuxième circuit d'alimentation 20 comprend, successivement dans le sens d'écoulement du deuxième ergol du deuxième réservoir 21 à l'intérieur de la chambre de combustion 3, une deuxième pompe 22 et une deuxième vanne 25 d'alimentation de la chambre de combustion 3. Par ailleurs, des premier et deuxième capteurs de débit 16, 26 sont installés sur, respectivement, le premier et le deuxième circuit d'alimentation 10, 20 afin de mesurer le débit (volumique ou massique) de chaque ergol fourni à la chambre de combustion. Dans le mode de réalisation illustré, ces capteurs de débit 16, 26 sont situés directement en amont des vannes 15, 25 d'alimentation de la chambre de combustion, mais d'autres positions alternatives sont également envisageables ainsi que d'autres moyens pour obtenir cette grandeur tels qu'un estimateur ou un modèle. En outre, un capteur de pression 30 est installé à l'intérieur de la chambre de combustion 3.

L'échangeur de chaleur 13 est formé sur au moins une paroi de la chambre propulsive 2, de manière à réchauffer le premier ergol par la chaleur de combustion des ergols dans la chambre de combustion 3, tout en assurant le refroidissement de cette paroi. La première turbine 14 est couplée mécaniquement à la première pompe 12, formant ainsi une première turbopompe TP1. D'autre part, la deuxième turbine 24 est couplée mécaniquement à la deuxième pompe 22, formant ainsi une deuxième turbopompe TP2. Ainsi, une première détente partielle du premier ergol, après avoir été réchauffé dans l'échangeur de chaleur 13, dans la première turbine 14, peut actionner la première pompe 12 pour assurer l'alimentation de la chambre de combustion 3 avec le premier ergol, tandis qu'une deuxième détente partielle du premier ergol peut actionner ensuite la deuxième pompe 22 pour assurer l'alimentation de la chambre de combustion 3 avec le deuxième ergol. Par ailleurs le premier circuit d'alimentation 10 comprend aussi une branche 17 de contournement des première et deuxième turbines 14, 24, avec une vanne 17v de contournement des première et deuxième turbines 14, 24, ainsi qu'une branche 18 de contournement de la deuxième turbine 24, avec une vanne 18v de contournement de la deuxième turbine 24. Les vannes de contournement 17v,18v forment ainsi des dispositifs de régulation des première et deuxième turbines 14,24.

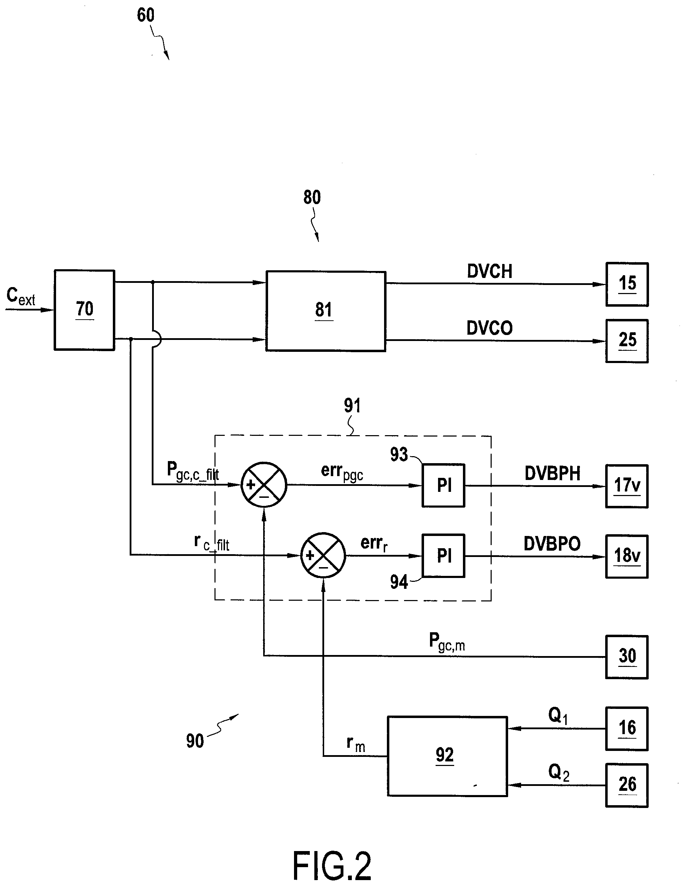

Dans le mode de réalisation illustré, les capteurs de débit 16, 26 et de pression 30, ainsi que les vannes d'alimentation 15,25 et de contournement 17v,18v sont tous connectés à l'unité électronique de commande 50 pour former un circuit de régulation 60 du moteur-fusée 1, illustré sur la figure 2. Cette unité électronique de commande 50 peut notamment comprendre un calculateur numérique avec une cadence d'échantillonnage prédéterminée.

Comme illustré sur la figure 2, ce circuit de régulation 60 peut comprendre un filtre de poursuite 70 en amont d'une boucle ouverte 80 de commande des vannes d'alimentation 15,25 et d'une boucle fermée 90 de commande des turbines 14,24. Le filtre de poursuite 70 peut notamment être un filtre de poursuite de premier ou de deuxième ordre.

Quoique dans le mode de réalisation illustré ce filtre soit commun aux deux boucles 80,90, il est également envisageable d'avoir un filtre de poursuite propre à chaque boucle. Ce filtre est destiné à filtrer une consigne externe $C_{ext}$ comprenant des valeurs de consigne $p_{gc,c\_ext}$ et $r_{c\_ext}$ pour, respectivement, une pression de gaz dans la chambre de combustion 3 et un rapport de débits entre les deux ergols, résultant ainsi en une consigne externe filtrée $C_{filt}$ avec des valeurs de consigne filtrées $p_{gc,c\_filt}$ et $r_{c\_filt}$. Le filtre de poursuite 70 peut notamment être un filtre numérique de premier ordre suivant la formule $C_{filt}(k)=K_{filt1}C_{filt}(k-1)+K_{filt2}C_{ext}(k-1)$, dans lequel chacune des valeurs de consigne filtrées $p_{gc,c\_filt}$ et $r_{c\_filt}$ à un instant d'échantillonnage k correspond à l'addition de la valeur de consigne filtrée $p_{gc,c\_filt}$ et $r_{c\_filt}$ correspondante à l'instant d'échantillonnage précédent k-1, multiplié par une première constante prédéterminée $K_{filt1}$, et la valeur de consigne correspondante $p_{gc,c\_ext}$ et $r_{c\_ext}$, à l'instant k-1 aussi, multipliée par une deuxième constante prédéterminée $K_{filt2}$. Par exemple, pour un moteur dont on souhaite une réponse en minimum 3s, avec une cadence d'échantillonnage de 10 ms, la valeur de $K_{filt1}$ peut être de 0,99005 et celle de $K_{filt2}$ 0,00995.

La boucle ouverte 80 comprend un premier module de calcul 81 connecté au filtre de poursuite 70 pour calculer des consignes DVCO, DVCH d'ouverture des vannes d'alimentation 15,25 de la chambre de combustion 3 à partir de la consigne externe filtrée $C_{filt}$. Ce module de calcul 81 peut notamment être configuré pour appliquer une loi de commande polynomiale, telle que celle suivant les équations suivantes :

$$DVCO = K_1x^4+K_2x^3+K_3x^2+K_4x+K_5$$

$$DVCH = K_6x^4+K_7x^3+K_8x^2+K_9x+K_{10}$$

dans lesquelles $K_1$ à $K_{10}$ sont des coefficients prédéterminés et x est un rapport entre la valeur filtrée de consigne de pression de gaz $p_{gc,c\_filt}$ et une valeur maximale prédéterminée $p_{gc,max}$ pour cette pression de gaz dans la chambre de combustion.

Toutefois, d'autres types de loi de commande, comme par exemple une loi de commande par réseau de neurones artificiels, sont également envisageables. Le module de calcul 81 est connecté à des actionneurs des vannes d'alimentation 15,25 de la chambre de combustion 3 pour leur transmettre les consignes d'ouverture DVCO, DVCH qui correspondent à un rapport entre le déplacement de chaque actionneur à partir d'une position fermée de la vanne correspondante, et sa course totale entre cette position fermée et une position d'ouverture maximale de la vanne.

La boucle fermée 90 comprend un module diviseur 92, éventuellement protégé contre les divisions par 0, et un module de calcul 91 connecté au filtre de poursuite 70, au capteur de pression 30 et, à travers le module diviseur 92, aux capteurs de débit 16, 26 pour calculer des consignes DVBPH, DVBPO d'ouverture des vannes de contournement 17v,18v à partir de la consigne externe filtrée $C_{filt}$, et de valeurs de rétroaction comprenant une valeur de pression de gaz $p_{gc,m}$ mesurée par le capteur de pression 30, et un rapport $r_m$ entre un débit $Q_1$ mesuré par le capteur de débit 16 et un débit $Q_2$ mesuré par le capteur de débit 26. Le module de calcul 91, qui a une fréquence de coupure plus élevée que le filtre de poursuite 70, peut par exemple prendre la forme d'un double correcteur de perturbations proportionnel intégral comme celui illustré sur la figure 2, avec un premier correcteur proportionnel intégral 93 pour générer la consigne DVBPH d'ouverture de la vanne de contournement 17v à partir de l'erreur $err_{pgc}$ entre la valeur filtrée de consigne de pression de gaz $p_{gc,c\_filt}$ et la valeur de pression de gaz $p_{gc,m}$ mesurée par le capteur de pression 30, et un deuxième correcteur proportionnel intégral 94 pour générer la consigne DVBPO d'ouverture de la vanne de contournement 18v à partir de l'erreur $err_r$ entre la valeur filtrée de consigne de rapport de débits d'ergols $r_{c\_filt}$ et le rapport $r_m$ entre le débit $Q_1$ mesuré par le capteur de débit 16 et le débit $Q_2$ mesuré par le capteur de débit 26, suivant les formules :

$$DVBPH(k)=DVBPH(k-1)-K_{p1}err_{pgc}(k)+K_{p1}err_{pgc}(k-1)-K_{i1}T_eerr_{pgc}(k-1)$$

$$DVBPO(k)=DVBPO(k-1)-K_{p2}err_r(k)+K_{p2}err_r(k-1)-K_{i2}T_eerr_r(k-1)$$

dans lesquelles DVBPH(k) et DVBPO(k) seront les valeurs des consignes DVBPH et DVBPO, respectivement, à l'instant d'échantillonnage k, DVBPH(k-1) et DVBPO(k-1) les valeurs de ces mêmes consignes à l'instant d'échantillonnage précédent k-1, $err_{pgc}(k)$ et $err_r(k)$ les valeurs des erreurs $err_{pgc}$ et $err_r$, respectivement, à l'instant d'échantillonnage k, $err_{pgc}(k-1)$ et $err_r(k-1$ les valeurs de ces mêmes erreurs à l'instant d'échantillonnage précédent, $K_{p1}$ et $K_{p2}$ les constantes proportionnelles de, respectivement, le premier et le deuxième correcteur proportionnel intégral 93 et 94, $K_{i1}$ et $K_{i2}$ leurs constantes intégrales respectives et $T_e$ la cadence d'échantillonnage du module de calcul 91. Les constantes proportionnelles $K_{p1}$ et $K_{p2}$ peuvent par exemple avoir des valeurs respectives de 8,1 et 90 MPa$^{-1}$ et les constantes intégrales $K_{i1}$ et $K_{i2}$ des valeurs respectives de 54 et 6000 MPa$^{-1}$s$^{-1}$ avec une cadence d'échantillonnage $T_e$ de 10 ms.

Toutefois, ce module de calcul 91 peut alternativement prendre d'autres formes, comme par exemple celle d'un correcteur multivariables, et notamment un correcteur à modèle interne prédictif.

En fonctionnement, le premier ergol liquide, qui peut notamment être un fluide cryogénique tel que l'hydrogène liquide, est extrait du premier réservoir 11 et pompé par la première pompe 12, à travers le premier circuit d'alimentation 10, vers la chambre de combustion 3. Dans l'échangeur de chaleur 13, le premier ergol liquide est réchauffé, augmentant ainsi son enthalpie. Une partie de cette enthalpie supplémentaire sert alors à actionner la première pompe 12 et la deuxième pompe 22 par détente partielle d'au moins une partie du débit du premier ergol liquide dans, respectivement, la première turbine 14 et la deuxième turbine 24. Les conduits de contournement 17, 18, avec leurs vannes de contournement 17v,18v respectives, permettent la régulation de la proportion du débit total du premier ergol liquide qui traverse chacune de ces deux turbines 14,24 et ainsi celle du régime des deux turbopompes TP1, TP2. Le débit total du premier ergol liquide traverse ensuite la première vanne 15 d'alimentation de la chambre de combustion 3, qui contribue à réguler ce débit total, avant d'être injecté dans la chambre de combustion 3. Le deuxième ergol liquide, qui peut aussi être un fluide cryogénique tel que l'oxygène liquide, est extrait du deuxième réservoir 21 et pompé par la deuxième pompe 22, à travers le deuxième circuit d'alimentation 20, y compris la deuxième vanne 25 d'alimentation de la chambre de combustion 3, pour être injecté dans la chambre de combustion 3. La deuxième vanne d'alimentation 25 contribue à réguler son débit.

Les deux ergols, mélangés au sein de la chambre de combustion 3, entrent en combustion, avec un fort dégagement de chaleur, pour générer des gaz de combustion à haute enthalpie dont la détente et l'accélération jusqu'à une vitesse supersonique dans la tuyère 4 produit une poussée en direction opposée. En même temps, une partie de la chaleur dégagée par la combustion des ergols contribue à chauffer le premier ergol liquide circulant à travers l'échangeur de chaleur 13.

La poussée produite ainsi par le moteur-fusée 1 dépend notamment de la pression des gaz $p_{gc,m}$ dans la chambre de combustion, ainsi que de leur température, et donc indirectement des débits $Q_1,Q_2$ des deux ergols. Ces valeurs sont mesurées par les capteurs de débit 16, 26 et de pression 30 et transmises à l'unité électronique de commande 50.

Dans l'unité électronique de commande 50, le filtre de poursuite 70 filtre la consigne externe $C_{ext}$ comprenant des valeurs de consigne $p_{gc,c\_ext}$ et $r_{c\_ext}$ et transmet la consigne externe filtrée $C_{filt}$ à la boucle ouverte 80 de commande des vannes d'alimentation 15,25 et à la boucle fermée 90 de commande des turbines 14,24. Cette consigne externe $C_{ext}$ peut par exemple suivre un profil préprogrammé stocké dans une mémoire interne de l'unité électronique de commande 50 pour suivre un profil préprogrammé, être calculée en vol par l'unité électronique de commande 50 en fonction de données de vol de l'engin propulsé par le moteur-fusée 1, ou être transmise à cet engin depuis une station de base.

Dans la boucle ouverte de commande des vannes d'alimentation 15,25, le premier module de calcul 81 connecté au filtre de poursuite 70 calcule des consignes DVCO, DVCH d'ouverture des vannes d'alimentation 15,25 de la chambre de combustion 3 à partir de la consigne externe filtrée $C_{filt}$. Ces consignes d'ouverture DVCO, DVCH sont alors transmises aux actionneurs des vannes d'alimentation 15,25 pour commander l'alimentation de la chambre de combustion 3 en ergols, et donc le régime de fonctionnement du moteur-fusée 1.

La boucle fermée 90 de commande des turbines 14,24 permet d'obtenir une régulation plus précise de ce régime de fonctionnement. Dans cette boucle fermée, les valeurs filtrées de consigne $p_{gc,filt}$ et $r_{filt}$ de la consigne externe filtrée $C_{filt}$ sont comparées aux valeurs mesurées respectives $p_{gc,m}$ et $r_m$ pour obtenir les erreurs correspondantes $err_{pgc}$ et $err_r$, à partir desquelles le module de calcul 91 calcule les consignes DVBPH, DVBPO d'ouverture des vannes de contournement 17v,18v. Ces consignes d'ouverture DVBPH, DVBPO sont alors transmises aux actionneurs des vannes de contournement 17v,18v pour réguler les régimes des turbines 14,24, et corriger les départs de régime du moteur-fusée par rapport à la consigne externe $C_{ext}$.

L'unité électronique de commande 50, et en particulier le module de calcul 81 de la boucle ouverte 80 peuvent être configurés tels que les consignes d'ouverture DVBPH, DVBPO des vannes de contournement 17v,18v dans la boucle fermée 90 restent dans une plage entre 20 et 80% d'ouverture. En particulier, ceci peut être réalisé par un choix approprié des coefficients $K_1$ à $K_{10}$.

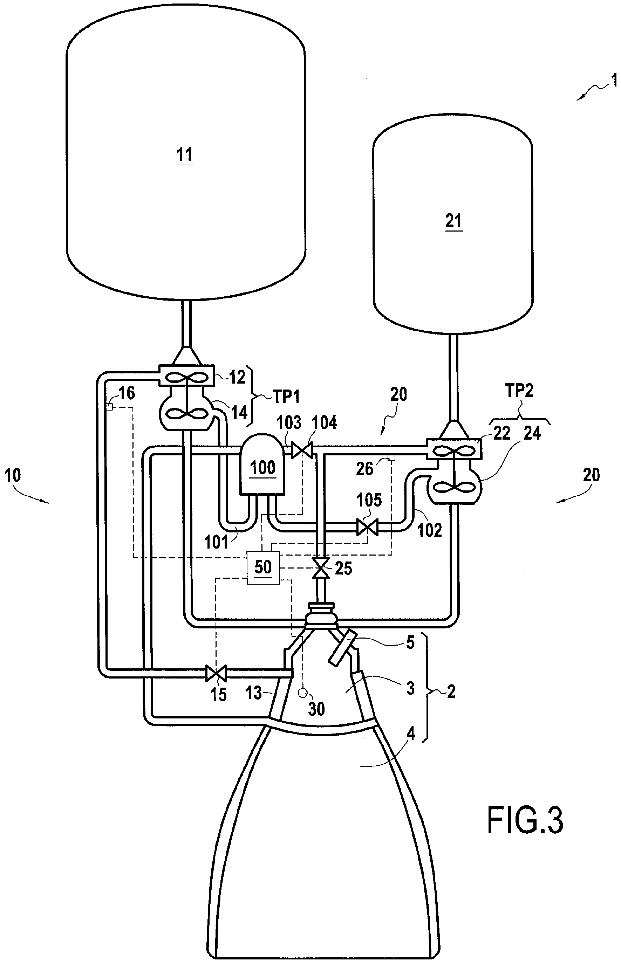

Bien que dans ce premier mode de réalisation, le procédé et système de régulation servent à réguler le fonctionnement d'un moteur-fusée de type « expander », il est également envisageable de les adapter à la régulation d'autres types de moteurs-fusées, comme par exemple le moteur-fusée à combustion étagée illustré sur la figure 3.

Ce moteur-fusée 1 comprend aussi une chambre propulsive 2, un premier circuit d'alimentation 10, un deuxième circuit d'alimentation 20, et une unité électronique de commande 50. La chambre propulsive 2 comprend une chambre de combustion 3, un allumeur 5 et une tuyère 4 pour la détente et éjection supersonique de gaz à haute enthalpie générés par combustion dans la chambre de combustion 3. Le premier circuit d'alimentation 10 relie un premier réservoir 11, contenant le premier ergol liquide, à un générateur de gaz 100 formant préchambre de combustion, pour alimenter ce générateur de gaz 100 en ce premier ergol liquide. Le deuxième circuit d'alimentation 20 relie un deuxième réservoir 21, contenant le deuxième ergol liquide, à la chambre propulsive 2 et au générateur de gaz 100, pour alimenter la chambre de combustion 3 et au générateur de gaz 100 en ce deuxième ergol liquide. Finalement, des conduits 101,102 relient le générateur de gaz 100 à la chambre propulsive 2 pour fournir à la chambre de combustion les gaz résultant d'une combustion partielle, dans le générateur de gaz 100, d'un mélange desdits premier et deuxième ergols, mélange riche en ce premier ergol.

Dans ce deuxième mode de réalisation, le premier circuit d'alimentation 10 comprend, successivement dans le sens d'écoulement du premier ergol, une première pompe 12, une première vanne 15 d'alimentation et un échangeur de chaleur 13. Le premier circuit d'alimentation 10 comprend en outre, pour l'entrainement de la première pompe 12, une première turbine 14, traversée par le conduit 101. Le deuxième circuit d'alimentation 20 comprend, successivement dans le sens d'écoulement du deuxième ergol, une deuxième pompe 22 et une deuxième vanne 25 d'alimentation. Il comprend aussi, pour l'entrainement de la deuxième pompe 22, une deuxième turbine 24, traversée par le conduit 102, ainsi qu'une dérivation 103, avec une vanne 104, pour l'alimentation du générateur de gaz 100. Par ailleurs, des premier et deuxième capteurs de débit 16, 26 sont installés sur, respectivement, le premier et le deuxième circuit d'alimentation 10, 20 afin de mesurer le débit (volumique ou massique) de chaque ergol fourni à la chambre de combustion. Dans ce deuxième mode de réalisation, ces capteurs de débit 16, 26 sont situés directement en aval des pompes 12, 22, mais d'autres positions alternatives sont également envisageables ainsi que d'autres moyens pour obtenir cette grandeur tels qu'un estimateur ou un modèle. En outre, un capteur de pression 30 est installé à l'intérieur de la chambre de combustion 3.

L'échangeur de chaleur 13 est formé sur au moins une paroi de la chambre propulsive 2, de manière à réchauffer le premier ergol par la chaleur de combustion des ergols dans la chambre de combustion 3, tout en assurant le refroidissement de cette paroi. La première turbine 14 est couplée mécaniquement à la première pompe 12, formant ainsi une première turbopompe TP1. D'autre part, la deuxième turbine 24 est couplée mécaniquement à la deuxième pompe 22, formant ainsi une deuxième turbopompe TP2. Ainsi, une combustion partielle, dans le générateur de gaz 100, du premier ergol avec une partie du deuxième ergol, dérivée d'un débit principal de ce deuxième ergol entre la deuxième pompe 22 et la deuxième vanne 25, génère un mélange de gaz riche en ce premier ergol et dont une première partie, circulant du générateur de gaz 100 à la chambre propulsive 2 à travers le premier conduit 101, peut actionner la première pompe 12 par détente partielle dans la première turbine 14 pour assurer la circulation du premier ergol, tandis qu'une deuxième partie, circulant en parallèle du générateur de gaz 100 à la chambre propulsive 2 à travers le deuxième conduit 102, peut actionner la deuxième pompe 22 par détente partielle dans la deuxième turbine 24 pour assurer la circulation du deuxième ergol. Par ailleurs, l'ensemble comprend aussi une vanne 105 installée sur le conduit 102. Les vannes 104 et 105 forment ainsi un dispositif de régulation des turbines 14 et 24.

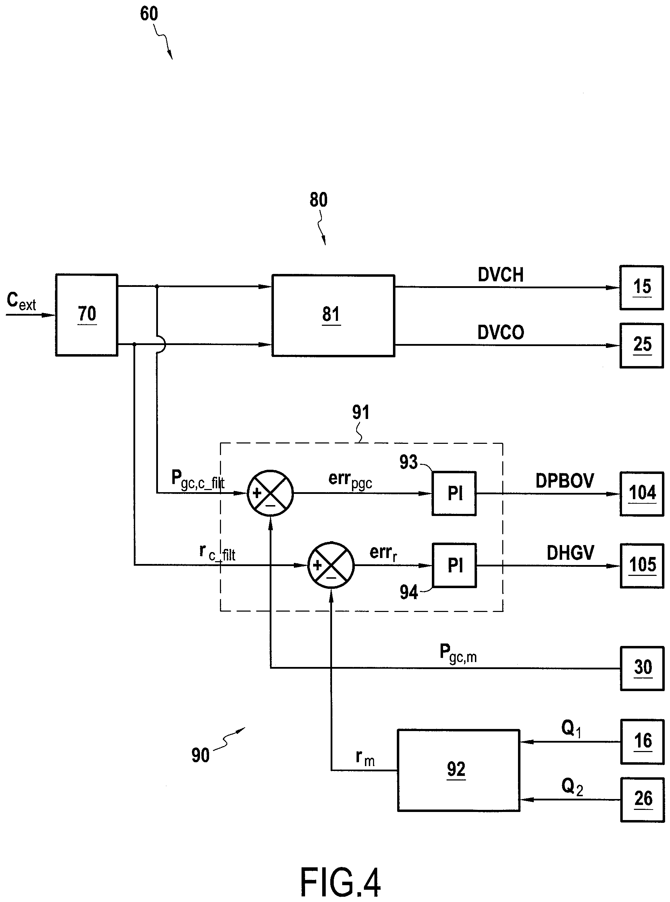

Dans ce deuxième mode de réalisation , les capteurs de débit 16, 26 et de pression 30, ainsi que les vannes 15, 25, 104 et 105 sont tous connectés à l'unité électronique de commande 50 pour former le circuit de régulation 60 du moteur-fusée 1 illustré sur la figure 4. Comme dans le premier mode de réalisation, l'unité électronique de commande 50 de ce deuxième mode de réalisation peut aussi comprendre un calculateur numérique avec une cadence d'échantillonnage prédéterminée.

Le circuit de régulation 60 suivant ce deuxième mode de réalisation est largement analogue à celui du premier mode de réalisation, et se différencie principalement de celui-ci en ce que sa boucle fermée 90 régule le fonctionnement des turbines 14,24 à travers les vannes 104,105, plutôt qu'à travers des vannes de contournement. Pour cela, le module de calcul 91 calcule des consignes DPBOV, DHGV d'ouverture des vannes 104, 105 de manière analogue aux consignes DVBPH, DVBPO du premier mode de réalisation. Les autres éléments dans ce deuxième mode de réalisation sont équivalents à ceux du premier mode de réalisation et reçoivent les mêmes références sur le dessin.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Procédé de régulation d'un moteur-fusée (1) à au moins un ergol liquide, ledit moteur-fusée comprenant au moins une chambre de combustion (3) et un premier circuit d'alimentation (10) en ergol liquide avec une première pompe (12) d'un premier ergol liquide et une première turbine (14) pour l'actionnement de la première pompe (12), une première vanne d'alimentation (15) de ladite chambre de combustion et un dispositif de régulation de la première turbine (14), ce procédé de régulation comprenant l'étape suivante:
   calcul d'une consigne pour le dispositif de régulation de la première turbine (14), à partir d'une consigne externe ($C_{ext}$) et d'au moins une valeur de rétroaction, suivant une loi de commande en boucle fermée ; et
   le procédé de régulation étant **caractérisé en ce qu'**il comprend en outre les étapes suivantes :

calcul d'une consigne d'ouverture (DVCH) de la première vanne d'alimentation (15), à partir de ladite consigne externe ($C_{ext}$), suivant une loi de commande en boucle ouverte ; et

commande de la première vanne d'alimentation (15) de la chambre de combustion (3) et du dispositif de régulation de la première turbine (14), suivant les consignes respectives.

2. Procédé de régulation d'un moteur-fusée (1) suivant la revendication 1, dans lequel ledit premier circuit d'alimentation (10) comprend un échangeur de chaleur (13) pour chauffer le premier ergol liquide en aval de la première pompe (12), et traverse la première turbine (14) en aval de l'échangeur de chaleur (13) pour actionner la première pompe (12) par détente, dans la première turbine (14), du premier ergol liquide chauffé dans l'échangeur de chaleur (13).

3. Procédé de régulation d'un moteur-fusée (1) suivant la revendication 1, dans lequel le moteur-fusée (1) comprend en outre un générateur de gaz (100) pour alimenter au moins la première turbine (14) en gaz de combustion chauds.

4. Procédé de régulation d'un moteur-fusée (1) suivant la revendication 3, dans lequel le dispositif de régulation de la première turbine (14) comprend au moins une vanne (104) d'alimentation du générateur de gaz (100).

5. Procédé de régulation d'un moteur-fusée (1) suivant l'une quelconque des revendications précédentes, dans lequel le dispositif de régulation de la première turbine (14) comprend une vanne de contournement (17v) de la première turbine (14).

6. Procédé de régulation d'un moteur-fusée (1) suivant l'une quelconque des revendications précédentes, dans lequel ladite consigne externe ($C_{ext}$) comprend une valeur de consigne de pression de gaz ($p_{gc\_ext}$) dans la chambre de combustion (3).

7. Procédé de régulation d'un moteur-fusée (1) suivant la revendication 6, dans lequel l'au moins une valeur de rétroaction comprend une valeur mesurée de pression de gaz ($p_{gc\_m}$) dans la chambre de combustion (3).

8. Procédé de régulation d'un moteur-fusée (1) suivant l'une quelconque des revendications précédentes, comprenant une étape de filtrage de la consigne externe ($C_{ext}$) dans un filtre de poursuite (70) pour obtenir une consigne externe filtrée ($C_{filt}$), et dans lequel le calcul de la consigne d'ouverture (DVCH) de la première vanne d'alimentation (15) est effectué à partir de la consigne externe filtrée ($C_{filt}$) et/ou le calcul de la consigne pour le dispositif de régulation de la première turbine (14) est effectué par un correcteur de perturbations à partir de l'au moins une valeur de rétroaction et de la consigne externe filtrée ($C_{filt}$), le correcteur de perturbations ayant une fréquence de coupure plus élevée que le filtre de poursuite.

9. Procédé de régulation d'un moteur fusée (1) suivant l'une quelconque des revendications précédentes, dans lequel le moteur-fusée (1) comprend en outre un deuxième circuit d'alimentation (20) pour un deuxième ergol liquide.

10. Procédé de régulation suivant la revendication 9, dans lequel ladite consigne externe ($C_{ext}$) comprend une valeur de consigne ($r_{ext}$) de rapport entre un débit ($Q_1$) du premier ergol et un débit ($Q_2$) du deuxième ergol.

11. Procédé de régulation suivant la revendication 10, dans lequel ladite au moins une valeur de rétroaction comprend une valeur mesurée ($r_m$) du rapport entre le débit ($Q_1$) du premier ergol et le débit ($Q_2$) du deuxième ergol.

12. Procédé de régulation d'un moteur-fusée suivant l'une quelconque des revendications 9 à 11, dans lequel le deuxième circuit d'alimentation (20) en ergol liquide comprend une deuxième vanne d'alimentation (25), et le procédé de régulation comprend aussi une étape de calcul d'une consigne d'ouverture (DVCO) de la deuxième vanne d'alimentation (25), à partir de la consigne externe ($C_{ext}$), suivant une loi de commande en boucle ouverte, et la commande de la deuxième vanne d'alimentation (25) suivant cette consigne d'ouverture (DVCO).

13. Procédé de régulation d'un moteur-fusée (1) suivant l'une quelconque des revendications 9 à 12, dans lequel le deuxième circuit d'alimentation (20) en ergol liquide comprend une deuxième pompe (22) pour ledit deuxième ergol liquide.

14. Procédé de régulation d'un moteur-fusée (1) suivant la revendication 13, dans lequel le moteur-fusée (1) comprend une deuxième turbine (24) pour l'actionnement de la deuxième pompe (22) et un dispositif de régulation de la deuxième turbine (24), et le procédé de régulation comprendrait aussi le calcul d'une consigne pour le dispositif de régulation de la deuxième turbine (24), à partir de ladite consigne externe ($C_{ext}$) et d'au moins une valeur de rétroaction, suivant une loi de commande en boucle fermée, et la commande du dispositif de régulation de la deuxième turbine (24), suivant cette consigne pour le dispositif de régulation de la deuxième turbine (24).

15. Circuit de régulation d'un moteur fusée (1) à au moins un ergol liquide, ledit moteur-fusée (1) comprenant au moins une chambre de combustion (3) et un premier circuit d'alimentation (10) en ergol liquide avec une première pompe (12) un premier ergol liquide et une première turbine (14) pour l'actionnement de la première pompe (12), une première vanne d'alimentation (15) de ladite chambre de combustion et un dispositif de régulation de la première turbine (14), le circuit de régulation comprenant :
une boucle fermée (90) de commande de la première turbine (14), avec un module (91) de calcul d'une consigne pour le dispositif de régulation de la première turbine (14) à partir d'une consigne externe ($C_{ext}$) et d'au moins une valeur de rétroaction ; et
étant **caractérisé en ce qu'**il comprend en outre une boucle ouverte (80) de commande de la première vanne d'alimentation (15), avec un module (81) de calcul d'au moins une consigne d'ouverture (DVCH) de la première vanne d'alimentation (15) à partir de ladite consigne externe ($C_{ext}$) ; et
**en ce qu'**il est configuré pour commander la première vanne d'alimentation (15) de la chambre de combustion (3) et le dispositif de régulation de la première turbine (14) suivant les consignes respectives.

**Patentansprüche**

1. Verfahren zur Regelung eines Raketentriebwerks (1) mit wenigstens einem flüssigen Treibstoff, wobei das Raketentriebwerk wenigstens eine Brennkammer (3) und einen ersten Kreis zur Versorgung (10) mit flüssigem Treibstoff mit einer ersten Pumpe (12) für einen ersten flüssigen Treibstoff und einer ersten Turbine (14) zur Betätigung der ersten Pumpe (12), einem ersten Ventil zur Versorgung (15) der Brennkammer und einer Vorrichtung zur Regelung der ersten Turbine (14) umfasst, wobei dieses Regelungsverfahren den folgenden Schritt umfasst:
Berechnen eines Sollwerts für die Vorrichtung zur Regelung der ersten Turbine (14) aus einem externen Sollwert ($C_{ext}$) und wenigstens einem Rückkopplungswert gemäß einem Regelungsgesetz, und
wobei das Regelungsverfahren **dadurch gekennzeichnet ist, dass** es ferner die folgenden Schritte umfasst:

Berechnen eines Öffnungssollwerts (DVCH) des ersten Versorgungsventils (15) aus dem externen Sollwert ($C_{ext}$) nach einem Steuerungsgesetz, und
Steuern des ersten Ventils zur Versorgung (15) der Brennkammer (3) und der Vorrichtung zur Regelung der ersten Turbine (14) entsprechend den jeweiligen Sollwerten.

2. Verfahren zur Regelung eines Raketentriebwerks (1) nach Anspruch 1, bei dem der erste Versorgungskreis (10) einen Wärmetauscher (13) zum Erhitzen des ersten flüssigen Treibstoffs stromabwärts der ersten Pumpe (12) umfasst und die erste Turbine (14) stromabwärts des Wärmetauschers (13) durchquert, um die erste Pumpe (12) durch Ausdehnung des in dem Wärmetauscher (13) erhitzten ersten flüssigen Treibstoffs in der ersten Turbine (14) zu betätigen.

3. Verfahren zur Regelung eines Raketentriebwerks (1) nach Anspruch 1, bei dem das Raketentriebwerk (1) ferner einen Gasgenerator (100) zum Beaufschlagen wenigstens der ersten Turbine (14) mit heißen Verbrennungsgasen umfasst.

4. Verfahren zur Regelung eines Raketentriebwerks (1) nach Anspruch 3, bei dem die Vorrichtung zur Regelung der ersten Turbine (14) wenigstens ein Ventil (104) zur Versorgung des Gasgenerators (100) umfasst.

5. Verfahren zur Regelung eines Raketentriebwerks (1) nach einem der vorhergehenden Ansprüche, bei dem die Vorrichtung zur Regelung der ersten Turbine (14) ein Ventil zur Umgehung (17v) der ersten Turbine (14) umfasst.

6. Verfahren zur Regelung eines Raketentriebwerks (1) nach einem der vorhergehenden Ansprüche, bei dem der externe Sollwert ($C_{ext}$) einen Gasdrucksollwert ($p_{gc\_ext}$) in der Brennkammer (3) umfasst.

7. Verfahren zur Regelung eines Raketentriebwerks (1) nach Anspruch 6, bei dem der wenigstens eine Rückkopplungswert einen Gasdruckmesswert ($p_{gc\_m}$) in der Brennkammer (3) umfasst.

8. Verfahren zur Regelung eines Raketentriebwerks (1) nach einem der vorhergehenden Ansprüche, umfassend einen Schritt des Filters des externen Sollwerts ($C_{ext}$) in einem Nachlauffilter (70), um einen gefilterten externen Sollwert

($C_{filt}$) zu erhalten, und bei dem das Berechnen des Öffnungssollwerts (DVCH) des ersten Versorgungsventils (15) anhand des gefilterten externen Sollwerts ($C_{filt}$) durchgeführt wird und/oder das Berechnen des Sollwerts für die Vorrichtung zur Regelung der ersten Turbine (14) durch einen Störungskorrektor anhand des wenigstens einen Rückkopplungswertes und des gefilterten externen Sollwerts ($C_{filt}$) durchgeführt wird, wobei der Störungskorrektor eine höhere Grenzfrequenz als das Nachlauffilter aufweist.

9.  Verfahren zur Regelung eines Raketentriebwerks (1) nach einem der vorhergehenden Ansprüche, bei dem das Raketentriebwerk (1) ferner einen zweiten Versorgungskreis (20) für einen zweiten flüssigen Treibstoff umfasst.

10. Regelungsverfahren nach Anspruch 9, bei dem der externe Sollwert ($C_{ext}$) einen Sollwert ($r_{ext}$) eines Verhältnisses zwischen einer Durchflussrate ($Q_1$) des ersten Treibstoffs und einer Durchflussrate ($Q_2$) des zweiten Treibstoffs umfasst.

11. Regelungsverfahren nach Anspruch 10, bei dem der wenigstens eine Rückkopplungswert einen Messwert ($r_m$) des Verhältnisses zwischen der Durchflussrate ($Q_1$) des ersten Treibstoffs und der Durchflussrate ($Q_2$) des zweiten Treibstoffs umfasst.

12. Verfahren zur Regelung eines Raketentriebwerks nach einem der Ansprüche 9 bis 11, bei dem der zweite Kreis zur Versorgung (20) mit flüssigem Treibstoff ein zweites Versorgungsventil (25) umfasst, und das Verfahren auch einen Schritt zum Berechnen eines Öffnungssollwerts (DVCO) des zweiten Versorgungsventils (25) aus dem externen Sollwert ($C_{ext}$) gemäß einem Steuerungsgesetz sowie die Steuerung des zweiten Versorgungsventils (25) gemäß diesem Öffnungssollwert (DVCO) umfasst.

13. Verfahren zur Regelung eines Raketentriebwerks (1) nach einem der Ansprüche 9 bis 12, bei dem der zweite Kreis zur Versorgung (20) mit flüssigem Treibstoff eine zweite Pumpe (22) für den zweiten flüssigen Treibstoff umfasst.

14. Verfahren zur Regelung eines Raketentriebwerks (1) nach Anspruch 13, bei dem das Raketentriebwerk (1) eine zweite Turbine (24) zum Betätigen der zweiten Pumpe (22) und eine Vorrichtung zur Regelung der zweiten Turbine (24) umfasst, und das Regelungsverfahren auch das Berechnen eines Sollwerts für die Vorrichtung zur Regelung der zweiten Turbine (24) aus dem externen Sollwert ($C_{ext}$) und aus wenigstens einem Rückkopplungswert gemäß einem Regelungsgesetz sowie die Steuerung der Vorrichtung zur Regelung der zweiten Turbine (24) gemäß diesem Sollwert für die Vorrichtung zur Regelung der zweiten Turbine (24) umfassen würde.

15. Schaltung zur Regelung eines Raketentriebwerks (1) mit wenigstens einem flüssigen Treibstoff, wobei das Raketentriebwerk (1) wenigstens eine Brennkammer (3) und einen ersten Kreis zur Versorgung (10) mit flüssigem Treibstoff mit einer ersten Pumpe (12) für einen ersten flüssigen Treibstoff und einer ersten Turbine (14) zur Betätigung der ersten Pumpe (12), einem ersten Ventil zur Versorgung (15) der Brennkammer und einer Vorrichtung zur Regelung der ersten Turbine (14) umfasst, wobei die Regelungsschaltung umfasst:

eine geschlossene Schleife (90) zur Regelung der ersten Turbine (14), mit einem Modul (91) zum Berechnen eines Sollwerts für die Vorrichtung zur Regelung der ersten Turbine (14) aus einem externen Sollwert ($C_{ext}$) und aus wenigstens einem Rückkopplungswert, und
**dadurch gekennzeichnet ist, dass** sie ferner eine offene Schleife (80) zur Steuerung des ersten Versorgungsventils (15) umfasst, mit einem Modul (81) zum Berechnen wenigstens eines Öffnungssollwerts (DVCH) des ersten Versorgungsventils (15) aus dem externen Sollwert ($C_{ext}$), und
dass sie dazu ausgelegt ist, das erste Ventil zur Versorgung (15) der Brennkammer (3) und die Vorrichtung zur Regelung der ersten Turbine (14) entsprechend den jeweiligen Sollwerten zu steuern.

**Claims**

1.  A method of regulating a rocket engine (1) having at least one liquid propellant, said rocket engine comprising at least one combustion chamber (3) and a first liquid propellant feed circuit (10) with a first pump (12) for pumping a first liquid propellant and a first turbine (14) for actuating the first pump (12), a first feed valve (15), and a regulator device for regulating the first turbine (14), the regulation method comprising the following step:
calculating a command for the regulator device of the first turbine (14) on the basis of an external command ($C_{ext}$) and of at least one feedback value, in application of a closed loop control relationship; and the method of regulating being **characterized in that** it further comprises the following steps:

• calculating an opening command (DVCH) for opening the first feed valve (15) from said external command ($C_{ext}$), in application of an open loop control relationship; and

• controlling the first feed valve (15) of the combustion chamber (3) and the regulator device of the first turbine (14) in compliance with the respective commands.

2. A method of regulating a rocket engine (1) in accordance with claim 1, wherein said first feed circuit (10) includes a heat exchanger (13) for heating the first liquid propellant downstream from the first pump (12), and then passes through the first turbine (14) downstream from the heat exchanger (13) in order to drive the first pump (12) by causing the first liquid propellant as heated in the heat exchanger (13) to expand in the first turbine (14).

3. A method of regulating a rocket engine (1) in accordance with claim 1, wherein the rocket engine (1) further includes a gas generator (100) for feeding at least the first turbine (14) with hot combustion gas.

4. A method of regulating a rocket engine (1) in accordance with claim 3, wherein the regulator device of the first turbine (14) comprises at least one feed valve (104) of the gas generator (100).

5. A method of regulating a rocket engine (1) in accordance with any preceding claim, wherein the regulator device of the first turbine (14) comprises a bypass valve (17v) for bypassing the first turbine (14).

6. A method of regulating a rocket engine (1) in accordance with any preceding claim, wherein said external command ($C_{ext}$) comprises a command value ($p_{gc\_ext}$) for the gas pressure in the combustion chamber (3).

7. A method of regulating a rocket engine (1) in accordance with claim 6, wherein at least one feedback value comprises a measured value ($p_{gc\_m}$) of the gas pressure in the combustion chamber (3).

8. A method of regulating a rocket engine (1) according to any preceding claim, including a step of filtering the external command ($C_{ext}$) in a tracking filter (70) in order to obtain a filtered external command ($C_{filt}$), and wherein the command (DVCH) for opening the first feed valve (15) is calculated on the basis of the filtered external command ($C_{filt}$) and/or the command for the regulator device for regulating the first turbine (14) is calculated by a disturbance corrector on the basis of at least one feedback value and of the filtered external command ($C_{filt}$), the disturbance corrector having a cutoff frequency that is higher than that of the tracking filter.

9. A method of regulating a rocket engine (1) according to any preceding claim, wherein the rocket engine (1) further comprises a second feed circuit (20) for feeding a second liquid propellant.

10. A method of regulating a rocket engine (1) according to claim 9, wherein said external command ($C_{ext}$) comprises a command value ($r_{ext}$) for the ratio between a flow rate ($Q_1$) of the first propellant and a flow rate ($Q_2$) of the second propellant.

11. A method of regulating a rocket engine (1) according to claim 10, wherein said at least one feedback value comprises a measured value ($r_m$) of the ratio between the flow rate ($Q_1$) of the first propellant and the flow rate ($Q_2$) of the second propellant.

12. A method of regulating a rocket engine (1) according to any one of claims 9 to 11, wherein the second liquid propellant feed circuit (20) includes a second feed valve (25), and the regulation method also includes a step of calculating an opening command (DVCO) for opening the second feed valve (25) on the basis of the external command ($C_{ext}$) in application of an open loop control relationship, and controlling the second feed valve (25) in application of this opening command (DVCO).

13. A method of regulating a rocket engine (1) according to any one of claims 9 to 12, wherein the second liquid propellant feed circuit (20) includes a second pump (22) for said second liquid propellant.

14. A method of regulating a rocket engine (1) according to claim 13, wherein the rocket engine (1) includes a second turbine (24) for driving the second pump (22) and a regulator device for regulating the second turbine (24), and the regulation method also includes calculating a command for the regulator device of the second turbine (24) on the basis of said external command ($C_{ext}$) and of at least one feedback value in application of a closed loop control relationship, and controlling the regulator device of the second turbine (24) in application of this command for the regulator device of the second turbine (24) .

**15.** A circuit for regulating a rocket engine (1) having at least one liquid propellant, said rocket engine (1) comprising at least one combustion chamber (3) and a first liquid propellant feed circuit (10) with a first pump (12) a first liquid propellant and a first turbine (14) for actuating the first pump (12), a first feed valve (15) of said combustion chamber, and a regulator device for regulating the first turbine (14), the regulator circuit comprising:

• a closed loop (90) for controlling the first turbine (14), with a module (91) for calculating a command for the regulator device of the first turbine (14) on the basis of an external command ($C_{ext}$) and of at least one feedback value; and

being **characterized in that** it comprises an open loop (80) for controlling the first feed valve (15), and including a module (81) for calculating at least one command (DVCH) for opening the first feed valve (15) on the basis of said external command ($C_{ext}$); and
**in that** it is configured to control the first feed valve (15) of the combustion chamber (3) and the regulator device of the first turbine (14) in application of respective commands.

FIG.1

FIG.2

FIG.3

FIG.4

**EP 3 153 691 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

* US 7477966 B1